# EUROPEAN PATENT SPECIFICATION

(11) **EP 2 899 071 B1**
(45) Date of publication and mention of the grant of the patent: **29.05.2019**
(21) Application number: 15151892.5
(22) Date of filing: 21.01.2015
(51) Int. Cl.: B60R 13/00, G09F 7/16, G09F 7/14, B60R 13/04, G09F 21/04, G09F 7/18

(54) **Sign**
Zeichen
Panneau

(30) Priority: 23.01.2014 JP 2014010751
(43) Date of publication of application: 29.07.2015
(73) Proprietor: KABUSHIKI KAISHA TOKAI RIKA DENKI SEISAKUSHO, Niwa-gun, Aichi 480-0195 (JP)
(72) Inventor: Misawa, Taiki, Niwa-gun,, Aichi 480-0195 (JP); Hayashi, Seiji, Niwa-gun,, Aichi 480-0195 (JP)
(74) Representative: TBK

(56) References cited:
- GB-A- 1 245 385
- GB-A- 2 187 092
- GB-A- 2 481 813
- US-A- 2 124 440
- US-A- 4 027 412
- Lihao Chrome Logo Manufactory: "Chrome car logo, lettering, emblem, badge - 3730410", www.ecvv.com , 26 June 2012 (2012-06-26), XP055196600, Retrieved from the Internet: URL:https://web.archive.org/web/2012062619 3513/http://www.ecvv.com/product/3730410.h tml [retrieved on 2015-06-17]
- Lihao Chrome Logo Manufactory: "Chrome car logo, lettering, emblem, badge - 3730410", www.ecvv.com , 1 April 2012 (2012-04-01), XP055196602, Retrieved from the Internet: URL:https://web.archive.org/web/2015061714 0141/http://upload.ecvv.com/upload/Product /20124/China_Chrome_car_logo_Chrome_car_le ttering_Chrome_car_emblem_car_badge_car_lo go_Chrome_nameplate20124231025467.jpg [retrieved on 2015-06-17]

## Description

### BACKGROUND

### Field of the Invention

The present invention relates to a sign.

### Related Art

JP H10 53895 A describes an ornamental member applied to a vehicle exterior decor of a car or the like. The ornamental member is employed as an emblem of formed or molded logo of the car manufacturer or text displaying name of the model of the car or the like, for example. The emblem is configured by arraying plural characters, and the characters are coupled together by coupling portions provided between the characters.

In the emblem, the coupling portions are provided so as to coincide at positions of upper edges of the characters. There is accordingly room for improvement in the strength of the characters and in the coupling strength between the characters and the coupling portions.

GB 2 481 813 A shows a generic sign according to the preamble of claim 1.

Further signs are shown in US 4 027 412 A, GB 2 187 092 A, US 2 124 440 A, GB 1 245 385 A, Lihao Chrome Logo Manufactory: "Chrome car logo, lettering, emblem, badge - 3730410", www.ecvv.com, 26 June 2012 (2012-06-26), XP055196600, [retrieved on 2015-06-17], retrieved from the internet: <URL:https://web.archive.org/web/20120626193513/http://www.ecvv.com/product/3730410. html>, and Lihao Chrome Logo Manufactory: "Chrome car logo, lettering, emblem, badge - 3730410", www.ecw.com, 1 April 2012 (2012-04-01), XP055196602, [retrieved on 2015-06-17], retrieved from the internet: <URL:https://web.archive.org/web/20150617140141/http://upload.ecvv.com/upload/Product/ 20124/China_Chrome_car_logo_Chrome_car_lettering_Chrome_car_emblem_car_badge_car _logo_Chrome_nameplate20124231025467.jpg>.

### SUMMARY

In consideration of the above circumstances, a sign having the features of claim 1 capable of increasing strength is provided. Advantageous further developments of the invention are set out in the dependent claims.

In the sign according to the invention, the plural symbol portions are arrayed in the array direction. The coupling portion is provided between the symbol portions and couple the symbol portions together.

The reinforcement portion is provided at the blank region formed by the symbol portion. The rigidity at a location along the blank region of the symbol portion is accordingly raised by the reinforcement portion, thereby enabling an increase in the strength of the symbol portions. In addition, the coupling portion is provided such that the position of the coupling portion and the position of the reinforcement portion coincide with each other in the array width direction. The symbol portion is accordingly coupled by the coupling portion at the location where the strength is reinforced, enabling an increase in the strength of the overall sign.

In the sign according to the invention, the array width direction center position of the coupling portion and the array width direction center position of the reinforcement portion are coincide with each other, such that the shapes of both the reinforcement portion and the coupling portion have substantial line symmetry about the array width direction center position. This enables the design characteristics of the sign to be improved.

Preferably, the respective blank regions are provided at the symbol portion on the both sides with respect to the array width direction center position of the symbol portion, and the reinforcement portion is provided at the one of the blank regions, the position in the array width direction of the one of the blank regions coinciding with the position in the array width direction of the coupling portion. The coupling portion and the reinforcement portion are thus disposed contiguously in a straight line along the array direction. This enables an improvement to the design characteristics of the sign.

Preferably, since the design of the reinforcement portion and the coupling portion is different to the design of the symbol portion, outline of the symbol portion is made clearer against the reinforcement portion and the coupling portion. This enables the visibility of the symbol portion to be improved.

Preferably, the design of the reinforcement portion and the coupling portion matches the design of the attachment body peripheral to the reinforcement portion and the coupling portion. The reinforcement portion and the coupling portion are accordingly not noticeable against a surface of the attachment body, and so the outline of the symbol portion is made clearer. This enables the visibility of the symbol portion to be improved.

Preferably, a width in the array width direction of the coupling portion is the same as a width in the array width direction of the reinforcement portion.

The sign described above exhibits the excellent advantageous effect of enabling an increase in strength.

### BRIEF DESCRIPTION OF THE DRAWINGS

Exemplary embodiments and comparative examples of the invention will be described in detail with reference to the following figures, wherein:
Figs. 1A and 1B are front views of signs according to a first exemplary embodiment of the present invention; Fig. 1A is a front view of a sign with symbol portions configured by upper case letters, and Fig. 1B is a front view of a sign with symbol portions configured by numbers;
Fig. 2 is an enlarged front view of relevant portions of the sign shown in Fig. 1A;
Fig. 3A is a cross-section of a sign taken along an array direction (along line A-A) of the symbol portions shown in Fig. 1A; and Fig. 3B is a side view and partial cross-section of a sign taken along an array width direction (along line B-B) of a symbol portion shown in Fig. 1A;
Fig. 4A is a front view of a sign including a symbol portion shown in Fig. 1A and another symbol, and Fig. 4B is a front view of another sign;

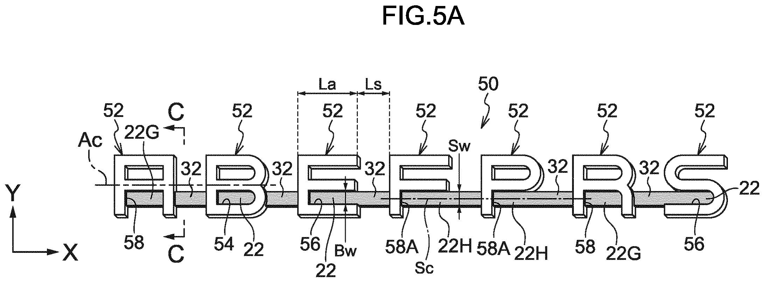

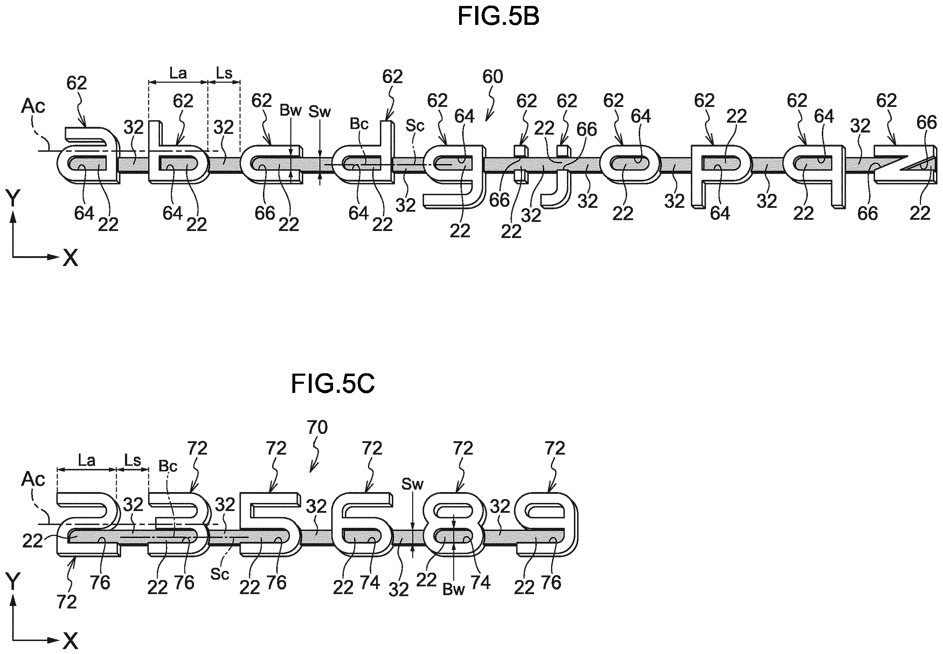

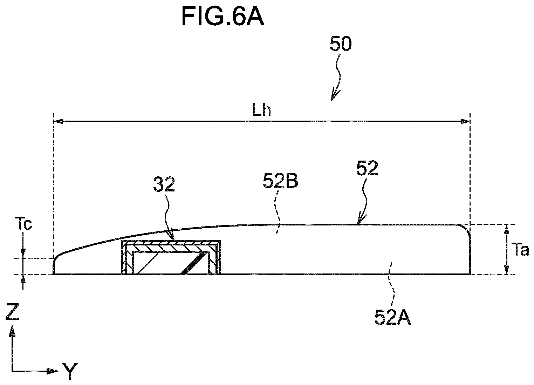

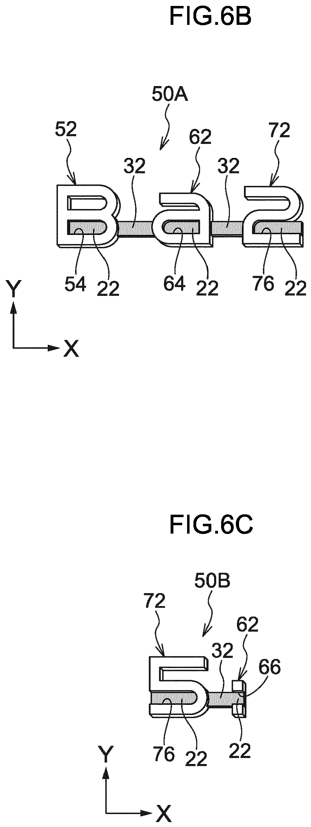

Figs. 5A, 5B, 5C are front views of signs according to a second exemplary embodiment of the present invention; Fig. 5A is a front view of a sign with symbol portions configured by upper case letters, Fig. 5B is a front view of a sign with symbol portions configured by lower case letters, and Fig. 5C is a front view of a sign with symbol portions configured by numbers; Fig. 6A is a side view and partial cross-section of a sign taken along an array width direction (along line C-C) of a symbol portion shown in Fig. 5A, Fig. 6B is a front view of a sign according to a modified example including a symbol portion shown in Fig. 5A, a symbol portion shown in Fig. 5B, and a symbol portion shown in Fig. 5C, and Fig. 6C is a front view of a sign according to a modified example including a symbol portion shown in Fig. 5C and a symbol portion shown in Fig. 5B;
Figs. 7A and 7B are front views of signs according to a non-claimed first comparative example, which is useful for understanding the present invention; Fig. 7A is a front view of a sign including a symbol portion shown in Fig. 1A and a symbol portion shown in Fig. 5A, and Fig. 7B is a front view of a sign including a symbol portion shown in Fig. 5C and a symbol portion shown in Fig. 1B;
Figs. 8A, 8B, 8C are front views of signs according to a non-claimed second comparative example, which is useful for understanding the present invention; Fig. 8A is a front view of a sign with symbol portions configured by upper case letters, Fig. 8B is a front view of a sign with symbol portions configured by lower case letters, and Fig. 8C is a front view of a sign with symbol portions configured by numbers;
Fig. 9 is an enlarged front view, corresponding to Figs. 4A and 4B, showing relevant portions of a sign according to a non-claimed third comparative example, which is useful for understanding the present invention; and
Fig. 10 is an enlarged front view, corresponding to Figs. 4A and 4B, showing relevant portions of a sign according to a third exemplary embodiment of the present invention.

### DETAILED DESCRIPTION

### First Exemplary Embodiment

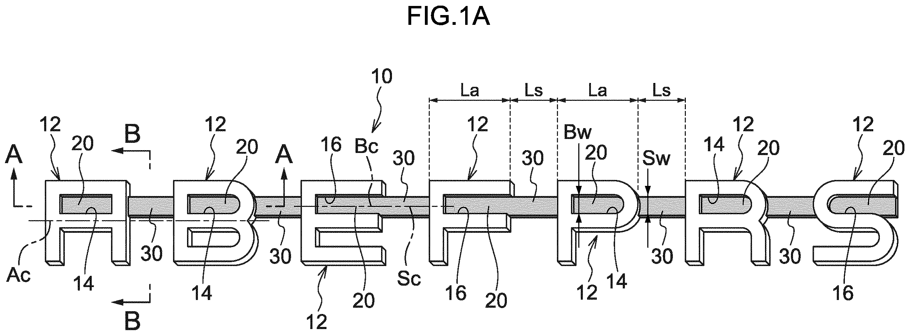

Explanation follows regarding a sign according to a first exemplary embodiment of the present invention, with reference to Figs. 1A, 1B, 2, 3A, 3B, 4A, 4B. Note that for ease of explanation, in the drawings the arrow X direction indicates an array direction or an array width direction of a symbol portion of the sign, and the arrow Y direction indicates an array width direction or an array direction of the sign, as appropriate. The arrow Z direction indicates the thickness direction of the sign. Note that there is no limitation to the direction in which the sign is applied to a vehicle or the like.

### Sign Configuration with Upper Case Letters as Symbol portions

As shown in Fig. 1A, a sign 10 according to the present exemplary embodiment includes plural symbol portions 12 arrayed in a straight line with the array direction along which the plural symbol portions 12 are arrayed in the arrow X direction. Symbol portions 12 adjacent to each other in the array direction are spaced at uniform intervals apart from each other in the present exemplary embodiment, and are coupled together by coupling portions 30, referred to as bridges. Regions in the array direction (array direction regions) corresponding to the symbol portions 12 are indicated by the reference numerals La, and in the same direction, regions corresponding to the coupling portions 30 are indicated by the reference numerals Ls.

In the sign 10 of the present exemplary embodiment, the symbol portions 12 are configured by principal upper case letters (capital letters of the Roman alphabet). More specifically, the sign 10 is configured by arraying of symbol portions 12 for the upper case letters "A", "B", "E", "F", "P", "R", and "S". Blank regions (space regions) 14 with an enclosed shape (a periphery enclosed shape) (more specifically, enclosed shape enclosed by a symbol body 12A, which will be described below, of the symbol portion 12) are provided inside the symbol portions 12 for the upper case letters "A", "B", "P", and "R" in a plan view (seen in a thickness direction of the symbol portion). In the present exemplary embodiment, reinforcement portions 20 are provided at the blank regions 14 which are positioned at upper portions of the symbol portions 12 in the array width direction which is orthogonal to the array direction, corresponding to the arrow Y direction. Blank regions (space regions) 16 with an opened shape (more specifically, opened shape formed by the symbol body 12A of the symbol portion 12) opening in the array direction (the arrow X direction and the opposite direction to the arrow X direction) are provided inside the symbol portions 12 for the upper case letters "E", "F", and "S" in a plan view. Similarly to the blank regions 14, in the present exemplary embodiment the reinforcement portions 20 are provided at the blank regions 16 which are positioned at upper portions of the symbol portions 12 in the array width direction. The symbol portions 12 for the upper case letters "B", "E", and "S" include the blank regions 14 or the blank regions 16 at both upper and lower sides with respect to center position Ac in the array width direction (referred to below as halfway position of the symbol height Lh). In the present exemplary embodiment, the reinforcement portions 20 are only provided at the blank regions 14 and the blank regions 16, which are positioned in the array width direction upper portions.

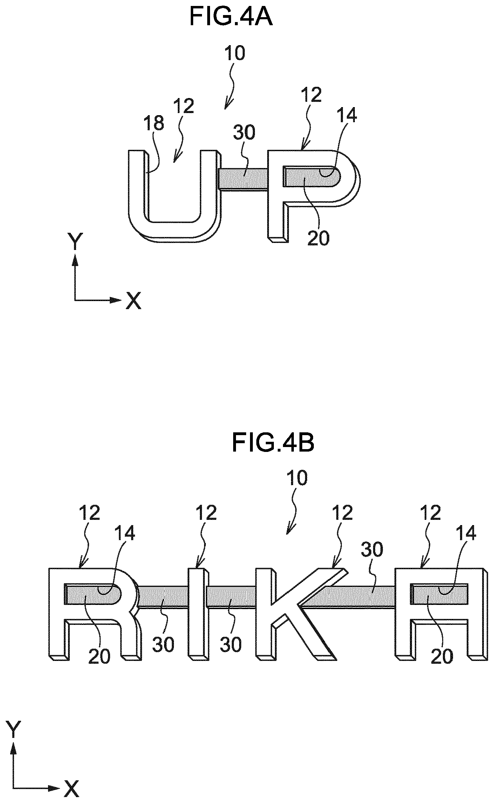

The upper case letters configuring the sign 10 are not limited to the symbol portions 12 for "A" etc. described above, and the sign 10 may be configured including symbol portions 12 for other upper case letters. As shown in Fig. 4A, the sign 10 may for example include a symbol portion 12 for the letter "U" that is another upper case letter. A blank region 18 with a shape opening in the array width direction, not in the array direction, is provided inside the symbol portion 12 for the upper case letter "U". The blank region 18 is not provided with a reinforcement portion 20. Symbol portions 12 for other upper case letters "H", "V", "W", "X", and "Y" and the like, omitted from illustration, are not provided with reinforcement portions 20 at their respective blank regions thereinside, similarly to the symbol portion 12 for the another upper case letter "U". Blank regions with an opened shape opening in the array direction are provided in the symbol portions 12 for other upper case letters, not shown in the drawings, "C" and "G" and the like, and blank regions with an enclosed shape (a periphery enclosed shape) are provided inside the symbol portions 12 for yet other upper case letters, not shown in the drawings, "D" and "O" and the like. The symbol portions 12 for these upper case letters each include a single blank region; however the reinforcement portions 20 are not provided at these respective blank regions. Such symbol portions 12 are distinguished from the symbol portions 12 for the upper case letters "A" etc. provided with the blank regions 14 or the blank regions 16 on both sides with respect to the array width direction center position Ac. Moreover, there are no blank regions inside the symbol portions 12 for other upper case letters such as "I" and "T", and so the reinforcement portions 20 are not provided.

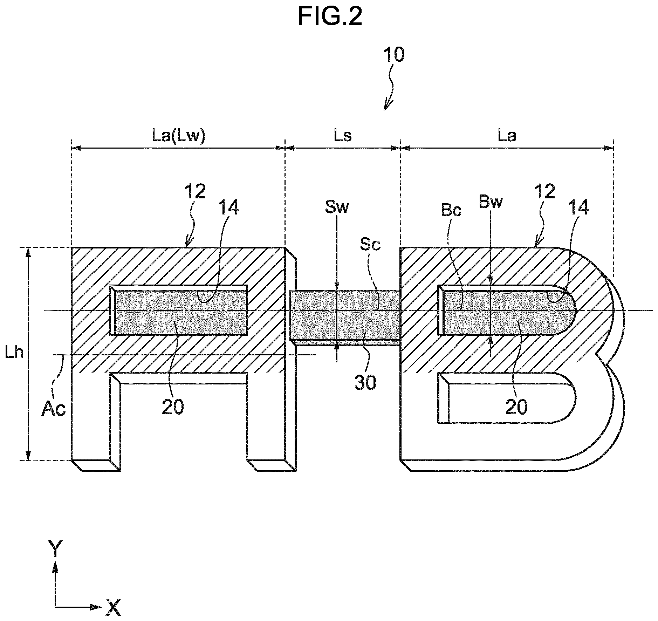

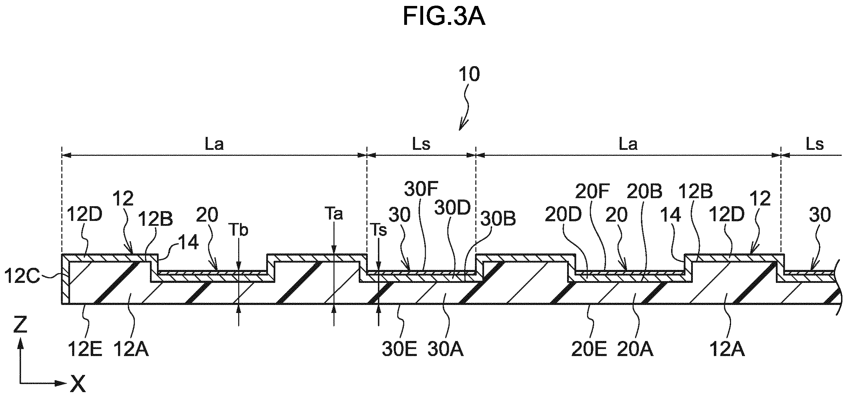

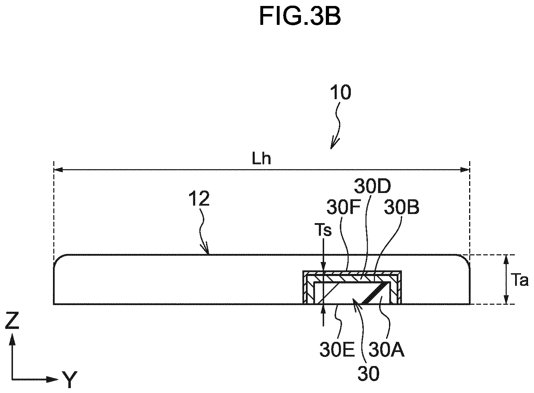

As shown in Fig. 2, the symbol portions 12 have a symbol width Lw (corresponding to (same as) the region La) in a direction same as the array direction and a symbol height Lh in a direction same as the array width direction. As shown in Fig. 3A and Fig. 3B, each symbol portion 12 has a symbol thickness Ta in a direction same as the arrow Z direction. The respective symbol portions 12 each include a symbol body 12A formed with a uniform thickness across the symbol width Lw direction and the symbol height Lh direction, and the symbol body 12A is, for example, formed by injection molding a colored or colorless resin material. In the present exemplary embodiment, a front face 12B and side faces 12C, serving as design faces of the symbol body 12A, are provided with a surface-processed layer 12D, and a back face 12E configuring an attachment face (or adhesion face) to the vehicle at the opposite side to the front face 12B (facing the front face 12B) is not provided with the surface-processed layer 12D. The surface-processed layer 12D is, for example, formed by chrome plating having silver gloss. Note that the surface-processed layer 12D is not limited to chrome plating, and may be configured by plating other than with chrome, or by a coating or the like. The surface-processed layer 12D may also be configured by applying texturing (embossing) to the surface of the symbol body 12A to give a leather pattern, a wood grain pattern, a stone finish pattern, a grainy pattern, a satin finish pattern, or a geometric pattern, for example. The surface-processed layer 12D may also be provided to the back face 12E of the symbol body 12A. Such a case eliminates the effort of performing masking or the like, enabling simplification of forming of the surface-processed layer 12D. At least a surface-processed layer 20D and a surface-processed layer 30D, described later, may be respectively provided to a back face 20E and a back face 30E, similarly to the surface-processed layer 12D.

As shown in Fig. 3A, the reinforcement portions 20 each includes a reinforcement body 20A configured integrally with the symbol bodies 12A. A reinforcement thickness (thickness in the arrow Z direction) Tb of the reinforcement portion 20 has a different thickness to the symbol thickness Ta, and is set thinner than the symbol thickness Ta in the present exemplary embodiment. The reinforcement body 20A is formed from a resin material similarly to the reinforcement body 20A. A front face 20B configuring a design face of the reinforcement body 20A is provided with a surface-processed layer 20D that is configured integrally with, and is the same as (formed during the same manufacturing process as), the surface-processed layer 12D. A back face 20E, on the opposite side to the front face 20B (facing the front face 20B), of the reinforcement body 20A is not provided with the surface-processed layer 20D. Moreover, the front face of the surface-processed layer 20D is provided with a surface-processed layer 20F which is different to the surface-processed layer 20D. The surface-processed layer 20F is, for example, configured by a color-coated layer, and is a black coated layer in the present example. Note that instead of being a color-coated layer, the surface-processed layer 20F may be configured by applying different texturing to that of the surface-processed layer 12D of the symbol portion 12.

As shown in Fig. 2, in, for example, the symbol portion 12 for the upper case letter "A", rather than being triangular, the shape of the array width direction upper portion is configured in a rectangular shape stretched out in the array direction so as to have the same dimension as the symbol width La. Due thereto, the shape of the blank region 14, the blank region 16 being thereby configured as a rectangular shape with length direction in the array direction, and the reinforcement portion 20 being provided to the blank region 14, the blank region 16. The symbol portion 12 is preferably configured as a whole with rectangular shaped letter form (style of type).

As shown in Fig. 1A and Fig. 2, the array width direction position of the coupling portion 30 between symbol portions 12 adjacent in the array direction, coincides with (is aligned with) the array width direction positions of the reinforcement portions 20, and in the present example, the coupling portion 30 is provided with the same width as the reinforcement portions 20. More specifically, an array width direction coupling width (width in the array width direction) Sw of the coupling portion 30 is the same as an array width direction reinforcement width (width in the array width direction) Bw of the reinforcement portions 20. A center position (center line) Sc of the coupling width Sw coincides with a center position (center line) Bc of the reinforcement width Bw. Note that, the definition of the term "the same" or "coincide" means to include "being exactly the same" or "exactly coincide", and also includes variation within a permissible range of processing variation or the like.

As shown in Fig. 2, Fig. 3A and Fig. 3B, the coupling portions 30 each include a coupling body 30A configured integrally with the respective symbol bodies 12A. In the present example, a coupling thickness (thickness in the arrow Z direction) Ts of the coupling portion 30 is the same as the thickness of the reinforcement thickness Tb. The cross-section structure of the coupling portion 30 is the same as the cross-section structure of the reinforcement portion 20. Namely, the coupling bodies 30A are configured integrally with the symbol bodies 12A. Moreover, front faces 30B and side faces 30C configuring design faces of the coupling body 30A are provided with a surface-processed layer 30D which is the same as the surface-processed layer 20D, and a front face of the surface-processed layer 30D is provided with a surface-processed layer 30F which is as the same as the surface-processed layer 20F. In the present exemplary embodiment, a back face 30E at the opposite side to the front face 30B (facing the front face 30B) is not provided with the surface-processed layer 30D.

In a case in which, for example, the symbol portion 12 for the upper case letter "U" that may be not a principal upper case letter is included in the sign 10, as shown in Fig. 4A, the coupling portion 30 is coupled directly to the symbol portion 12 for the other upper case letter "U", without varying the array width direction position of the coupling portion 30. Similarly, in a case in which, for example, the sign 10 includes the symbol portions 12 for the other upper case letters "K" and "I" to spell "RIKA" as shown in Fig. 4B, the coupling portions 30 are coupled directly to the symbol portions 12 for the other upper case letters "K" and "I", without varying the array width direction position of the coupling portions 30.

Note that in the symbol portions 12 for upper case letters shown in Fig. 1A, the reinforcement portions 20 are provided to all of the blank regions 14 and all of the blank regions 16 at the array width direction upper portion along the array direction. In the present exemplary embodiment, the reinforcement portions 20 may also be provided to some of the blank regions 14 and blank regions 16 of the symbol portions 12. For example, in the symbol portions 12 for the upper case letters "A", "B", and "E" arrayed on the left hand side, the reinforcement portions 20 may be provided to the blank region 14 and the blank region 16 of the respective symbol portions 12 for the upper case letters "A" and "E", without providing a reinforcement portion 20 to the blank region 14 of the symbol portion 12 for the upper case letter "B". Moreover, the symbol portions 12 for upper case letters are spaced at uniform intervals apart from each other in the array direction; however some of intervals in the array direction may be varied in the present exemplary embodiment. All of the symbol portions 12 for upper case letters have the same symbol width Lw and symbol height Lh as each other, however the present invention may include some symbol portions 12 in which the symbol width Lw and/or the symbol height Lh have been varied.

### Sign Configuration with Numbers as Symbol portions

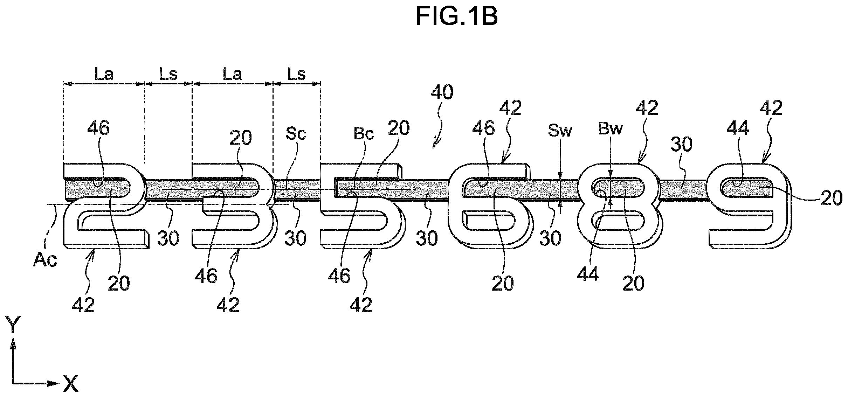

A sign 40 according to the first exemplary embodiment shown in Fig. 1B includes plural symbol portions 42 arrayed in a straight line with the array direction in the arrow X direction, similarly to in the sign 10. Symbol portions 42 adjacent to each other in the array direction are spaced at uniform intervals apart from each other, and are coupled together by coupling portions 30. Similarly to the sign 10, in the sign 40, regions in the array direction (array direction regions) corresponding to the symbol portions 42 are indicated by the reference numerals La, and regions corresponding to the coupling portions 30 in the same direction are indicated by the reference numerals Ls.

In the sign 40 of the present exemplary embodiment, the symbol portions 42 are configured by principal numbers (Arabic numerals). More specifically, the sign 40 is configured by arraying symbol portions 42 for the numbers "2", "3", "5", "6", "8", and "9". Blank regions 44 with closed shape (periphery enclosed shape) are provided inside the symbol portions 42 for the numbers "8" and "9". In the present exemplary embodiment, reinforcement portions 20 are provided in the blank regions 44 positioned in array width direction upper portions of the symbol portions 42. Note that although blank regions with closed shapes are provided at array width direction lower portions inside the symbol portions 42 for the numbers "6" and "8", reinforcement portions 20 are not provided to these blank regions. Moreover, blank regions 46 with an opened shape opening in the array direction (the arrow X direction and the opposite direction to the arrow X direction) are provided inside the symbol portions 42 for the numbers "2", "3", "5", and "6". Similarly to the blank regions 44, in the present exemplary embodiment, reinforcement portions 20 are provided in the blank regions 46 positioned in array width direction upper portions of the symbol portions 42. Note that blank regions with open shapes are also provided at array width direction lower portions inside the symbol portions 42 for the numbers "2", "3", "5", and "9"; however reinforcement portions 20 are not provided at these blank regions.

The numbers configuring the sign 40 are not limited to the symbol portions 42 for "2" etc. described above, and symbol portions 42 may also be included for the other numbers "1", "4", "7", and "0", not shown in the drawings. Note that blank regions with an enclosed shape are also provided inside the respective symbol portions 42 for the numbers "4" and "0", however reinforcement portions 20 are not provided to these blank regions. Moreover, a blank region with an opened shape opening in both the array direction and the array width direction is provided inside the symbol 42 for the number "7", however a reinforcement portion 20 is not provided to this blank region. The symbol 42 for the number "1" does not have a blank region, and so a reinforcement portion 20 is not provided.

Similarly to the coupling portions 30 of the sign 10, the array width direction position of the coupling portion 30 between symbol portions 42 adjacent in the array direction, coincides with (is aligned with) the array width direction positions of the reinforcement portions 20, and in the present example, the coupling portion 30 is provided with the same width as the reinforcement portions 20. More specifically, an array width direction coupling width Sw of the coupling portion 30 is the same as an array width direction reinforcement width Bw of the reinforcement portions 20. A center position Sc of the coupling width Sw coincides with a center position Bc of the reinforcement width Bw.

The cross-section structures of the symbol portions 42, the reinforcement portions 20, and the coupling portions 30 of the sign 40 are the same as the cross-section structures of the symbol portions 12, the reinforcement portions 20, and the coupling portions 30 of the sign 10 shown in Fig. 3A and Fig. 3B.

### Operation and Advantageous Effects of the Present Exemplary Embodiment

As shown in Fig. 1A, in the sign 10 according to the present exemplary embodiment plural of the symbol portions 12 for upper case letters are arrayed in the array direction. The coupling portions 30 are provided between the symbol portions 12, and the symbol portions 12 are coupled together by the coupling portions 30.

The reinforcement portions 20 are provided at the respective blank regions 14 or blank regions 16 of the symbol portions 12. The rigidity of location along or around the blank region 14 and the blank region 16 (the hatched region in Fig. 2) of the symbol portion 12 is thereby increased by the reinforcement portion 20, enabling an increase in the strength of the symbol portion 12. Additionally, as shown in Fig. 2 in particular, the coupling portion 30 is provided at the position in the array width direction, which is the same as the positions in the array width direction of the reinforcement portions 20. The sites where the strength of the symbol portions 12 are reinforced (the hatched regions in Fig. 2) are thus coupled by the coupling portion 30, enabling an increase in strength of the overall sign 10. The sign 10 of the present exemplary embodiment accordingly enables an increase in strength. Note that in the sign 40 according to the present exemplary embodiment shown in Fig. 1B, the symbol portions 42 are configured by numbers; similar operation and advantageous effects can be obtained to the operation and advantageous effects obtained by the sign 10.

In the sign 10 according to the present exemplary embodiment, the reinforcement portions 20 and the coupling portions 30 are set at the same position, and with the same widths (the reinforcement width Bw and the coupling width Sw), in the array width direction. The reinforcement portions 20 and the coupling portions 30 are accordingly connected in a straight line shape along the array direction of the symbol portions 12, enabling a sense of uniformity in the overall form of the reinforcement portions 20 and the coupling portions 30, and in the overall form of the symbol portions 12, thereby enabling improved design characteristics.

In the sign 10 according to the present exemplary embodiment, as shown in Fig. 2 in particular, the center position Bc of the reinforcement portions 20 and the center position Sc of the coupling portions 30 are the same in the array width direction. The array width direction shapes of the reinforcement portions 20 and the coupling portions 30 therefore have substantial line symmetry about the center position Bc and the center position Sc respectively. This enables a further improvement to the design characteristics of the sign 10. A further improvement to the design characteristics is likewise enabled in the sign 40, similarly to in the sign 10.

Moreover, in the sign 10 according to the present exemplary embodiment, the blank regions 14 and the blank regions 16 are provided on both sides with respect to the array width direction center positions Ac of the symbol portions 12, and the reinforcement portions 20 are provided to the blank regions 14 and/or the blank regions 16 at the one side, whose array width direction positions are the same as the array width direction positions the coupling portions 30. The coupling portions 30 and reinforcement portions 20 are thereby disposed contiguously in a straight line along the array direction, enabling an improvement in the design characteristics of the sign 10.

In the sign 10 according to the present exemplary embodiment, as shown in Fig. 3A and Fig. 3B, the design of the reinforcement portions 20 and the coupling portions 30 differs from the design of the symbol portions 12. More specifically, in the present example the design faces of the symbol portions 12 are configured with the surface-processed layer 12D formed by chrome plating, and the surface-processed layer 20F configuring the design faces of the reinforcement portions 20, and the surface-processed layer 30F configuring the design faces of the coupling portions 30 are configured by color-coated layers or texturing. The outlines of the symbol portions 12 are accordingly made clearer against the reinforcement portions 20 and the coupling portions 30, making the symbol portions 12 easier to read, and improving the visibility of the symbol portions 12. Note that the sign 40 according to the present exemplary embodiment shown in Fig. 1B can also obtain the operation and advantageous effects of improving visibility, similarly to the operation and advantageous effects obtained by the sign 10 according to the present exemplary embodiment.

As described above, the sign 10 according to the present exemplary embodiment enables an increase in overall strength, including that of the symbol portions 12 and the coupling portions 30. The line thickness for the upper case letters of the symbol portions 12, for example, can accordingly be made thinner, enabling an increase in the degrees of freedom for design characteristics. Note that the sign 40 according to the present exemplary embodiment can also obtain the operation and advantageous effects of enabling an increase in the degrees of freedom for design characteristics, similarly to the operation and advantageous effects obtained by the sign 10 according to the present exemplary embodiment.

As shown in Fig. 3A, in the sign 10 according to the present exemplary embodiment, the reinforcement portions 20 are provided to the blank regions 14 and the blank regions 16 of the symbol portions 12. A step between the front face 12B of the symbol body 12A of the symbol portion 12, and the front face 20B of the reinforcement body 20A of the reinforcement portion 20 is accordingly reduced. In the present exemplary embodiment, the surface-processed layer 12D and the surface-processed layer 20D are formed by chrome plating. The reduction in the step mentioned above improves entering (circulation) of the chrome plating fluid in the blank regions 14 and the blank regions 16, enabling the chrome plating fluid to reach corners of step portions, and thereby enabling an improvement in the finish quality of the surface-processed layer 12D and the surface-processed layer 12D. For example, unevenness and plating defects are eliminated, enabling a bright gloss silver finish for the chrome plating layer. The sign 40 according to the present exemplary embodiment can likewise obtain similar operation and advantageous effects as the operation and advantageous effects obtained by the sign 10 according to the present exemplary embodiment.

### Second Exemplary Embodiment

Explanation follows regarding signs according to a second exemplary embodiment of the present invention, with reference to Figs. 5A, 5B, 5C and Figs. 6A, 6B, 6C. Note that in the second exemplary embodiment and thereafter mentioned exemplary embodiments and comparative examples, configurations with equivalent functions to configurations of the sign 10 of the first exemplary embodiment are allocated the same reference numerals, and duplicate explanation of configurations having the same reference numerals is omitted.

### Sign Configuration with Upper Case Letters as Symbol portions

As shown in Fig. 5A, a sign 50 according to the second exemplary embodiment includes plural symbol portions 52 arrayed in a straight line with the array direction in the arrow X direction, similarly to the sign 10 according to the first exemplary embodiment. Adjacent symbol portions 52 in the array direction are spaced at uniform intervals apart from each other, and are coupled together by coupling portions 32. Similarly to the sign 10, in the sign 50, regions in the array direction corresponding to the symbol portions 52 are indicated by the reference numerals La, and in the same direction, regions corresponding to the coupling portions 32 are indicated by the reference numerals Ls.

In the sign 50, similarly to the sign 10, the symbol portions 52 are configured by principal upper case letters. More specifically, the sign 50 is configured by an array of symbol portions 52 for the upper case letters "A", "B", "E", "F", "P", "R", and "S". Blank regions 54 with closed shape (periphery enclosed shape) are provided inside the symbol portions 52 for the upper case letters "A", "B", "P", and "R". In the present exemplary embodiment, reinforcement portions 22 are not provided to the blank regions 54 positioned at array width direction upper portions of the symbol portions 52, however a reinforcement portion 22 is provided to the blank region 54 positioned at an array width direction lower portion of the symbol 52 for the upper case letter "B". Blank regions 56 with an opened shape opening in the array direction are provided inside the symbol portions 52 for the upper case letters "E", "F", and "S". In the present exemplary embodiment, reinforcement portions 22 are not provided to the blank regions 56 positioned at array width direction upper portions of the symbol portions 52, however reinforcement portions 22 are provided to the blank regions 56 positioned at array width direction lower portions of the symbol portions 52 for the upper case letters "E" and "S". Moreover, blank regions 58 with an opened shape opening in the array width direction and positioned in array width direction lower portions are provided inside the symbol portions 52 for the upper case letters "A" and "R", and reinforcement portions 22G are provided in the blank regions 58. Blank regions 58A with an opened shape opening in the array direction and in the array width direction and positioned in array width direction lower portions are provided inside the symbol portions 52 for the upper case letters "F" and "P", and reinforcement portions 22H are provided in the blank regions 58A. Similarly to in the sign 10, there is no limitation of the upper case letters configuring the sign 50 to the symbol portions 52 for the letters "A" etc. mentioned above, and the sign 50 may be configured including symbol portions 52 for other upper case letters.

Similarly to the coupling portions 30 of the sign 10, the array width direction positions of the coupling portions 32 of the sign 50 between adjacent symbol portions 52 in the array direction coincide with (are aligned with) the array width direction positions of the reinforcement portions 22, and the coupling portions 32 are provided with the same width as the reinforcement portions 22 in the present example. The array width direction coupling width Sw of the coupling portions 32 is set to the same width as the array width direction reinforcement width Bw of the reinforcement portions 22. The center position Sc of the coupling width Sw coincides with center position Bc of the reinforcement width Bw.

The cross-section structures of the symbol portions 52, the reinforcement portions 22, and the coupling portions 32 of the sign 50 are the same as the cross-section structures of the symbol portions 12, the reinforcement portions 20, and the coupling portions 30 of the sign 10 shown in Fig. 3A. Namely, in the symbol portion 52, a front face (52B) of a symbol body (52A) is provided with a surface-processed layer. Moreover, two surface-processed layers are provided on the front face of reinforcement body of the reinforcement portion 22, and two surface-processed layers are provided on the front face of coupling body of the coupling portion 32. Note that the reinforcement portions 22G and the reinforcement portions 22H are the same configuration to the reinforcement portions 22.

As shown in Fig. 6A, in the symbol portion 52 of the sign 50, a symbol thickness Ta changes to a symbol thickness Tc thinner than Ta on progression from the array width direction upper portion toward the array width direction lower portion (along the symbol height Lh), and the front face 52B of the symbol body 52A is formed with a projecting curved face shape. Note that the symbol portions 52 of the sign 50 may also be configured with a uniform symbol thickness Ta over the array width direction, similarly to the symbol portions 12 of the sign 10 shown in Fig. 3B.

### Sign Configuration with Lower Case Letter as Symbol portions

A sign 60 according to the second exemplary embodiment shown in Fig. 5B includes plural symbol portions 62 arrayed in a straight line with the array direction in the arrow X direction, similarly to the sign 50. Adjacent symbol portions 62 in the array direction are spaced at uniform intervals apart from each other, and are coupled together by the coupling portions 32. Similarly to the sign 50, in the sign 60, regions in the array direction corresponding to the symbol portions 62 are indicated by the reference numerals La, and in the same direction, regions corresponding to the coupling portions 32 are indicated by the reference numerals Ls.

In the sign 60 of the present exemplary embodiment, the symbol portions 62 are configured by principal lower case letters (small letters of the Roman alphabet). More specifically, the sign 60 is configured by an array of symbol portions 62 for the lower case letters "a", "b", "c", "d", "g", "i", "j", "o", "p", "q", and "z". Blank regions 64 with an enclosed shape (periphery enclosed shape) are provided inside the symbol portions 62 for the lower case letters "a", "b", "d", "g", "o", "p", and "q". In the present exemplary embodiment, reinforcement portions 22 are provided to the blank regions 64 of the symbol portions 62. Note that the positions of the blank regions 64 of the symbol portions 62 in the array width direction are the same as (correspond to) the positions of the blank regions 54 which is at the array width direction lower portion of the symbol portions 52 shown in Fig. 5A. The reinforcement portions 22 provided to the blank regions 64 are therefore equivalent to (similar to) the reinforcement portions 22 provided to the blank regions 54. Blank regions 66 with an opened shape opening in the array direction are provided inside the symbol portions 62 for the lower case letters "c" "i" "j", and "z". The blank regions 66 of the symbol portions 62 are provided with the reinforcement portions 22. Similarly to in the sign 50, there is no limitation of the lower case letters configuring the sign 60 to the symbol portions 62 for the letters "a" etc. described above, and the sign 60 may be configured including symbol portions 62 for other lower case letters.

Similarly to the coupling portions 32 of the sign 50, the array width direction positions of the coupling portions 32 of the sign 60 between adjacent symbol portions 62 in the array direction coincide with (are aligned with) the array width direction positions of the reinforcement portions 22, and the coupling portions 32 are provided with the same width as the reinforcement portions 22 in the present example. The array width direction coupling width Sw of the coupling portions 32 is the same as the array width direction reinforcement width Bw of the reinforcement portions 22. Moreover, the center position Sc of the coupling width Sw coincides with the center position Bc of the reinforcement width Bw.

The cross-section structures of the symbol portions 62, the reinforcement portions 22, and the coupling portions 32 of the sign 60 are the same as the cross-section structures of the symbol portions 52, the reinforcement portions 22, and the coupling portions 32 of the sign 50 (see Fig. 3A and Fig. 6A).

### Sign Configuration with Numbers as Symbol portions

A sign 70 according to the second exemplary embodiment shown in Fig. 5C includes plural symbol portions 72 arrayed in a straight line with the array direction in the arrow X direction, similarly to in the sign 40 shown in Fig. 1B. Adjacent symbol portions 72 adjacent in the array direction are spaced at uniform intervals apart from each other, and are coupled together by coupling portions 32. Similarly to the sign 50, in the sign 70, regions in the array direction corresponding to the symbol portions 72 are indicated by the reference numerals La, and in the same direction, regions corresponding to the coupling portions 32 are indicated by the reference numerals Ls.

Similarly to the sign 40 shown in Fig. 1B, in the sign 70 of the present exemplary embodiment, the symbol portions 72 are configured by principal numbers. More specifically, the sign 70 is configured by an array of symbol portions 72 for the numbers "2", "3", "5", "6", "8", and "9". Blank regions 74 with an enclosed shape (periphery enclosed shape) are provided inside the symbol portions 72 for the numbers "6" and "8". In the present exemplary embodiment, reinforcement portions 22 are provided in the blank regions 74 positioned in array width direction lower portions of the symbol portions 72. Note that although blank regions are also provided at array width direction upper portions inside the symbol portions 72 for the numbers "8" and "9", the reinforcement portions 22 are not provided to these blank regions. Blank regions 76 with an opened shape opening in the array direction are provided inside the symbol portions 72 for the numbers "2", "3", "5", and "9". Similarly to the blank regions 74, in the present exemplary embodiment, reinforcement portions 22 are provided to the blank regions 76 positioned in array width direction lower portions of the symbol portions 72. Note that blank regions positioned at array width direction upper portions are also provided inside of the symbol portions 72 for the numbers "2", "3", "5", and "6"; however reinforcement portions 22 are not provided to these blank regions.

The numbers configuring the sign 70 are not limited to the symbol portions 72 for the number "2" etc. mentioned above, and symbol portions 72 for the other numbers "1", "4", "7", and "0", not shown in the drawings, may also be included. Note that similarly to in the sign 40 shown in Fig. 1B, symbol portions 72 for such other numbers are not provided with reinforcement portions 22.

Similarly to the coupling portions 32 of the sign 50, the array width direction positions of the coupling portions 32 of the sign 70 between adjacent symbol portions 72 in the array direction coincide with (are aligned with) the array width direction positions of the reinforcement portions 22, and the coupling portions 32 are provided with the same width as the reinforcement portions 22 in the present example. The array width direction coupling width Sw of the coupling portions 32 is the same width as the array width direction reinforcement width Bw of the reinforcement portions 20. The center position Sc of the coupling width Sw coincides with the center position Bc of the reinforcement width Bw.

The cross-section structures of the symbol portions 72, the reinforcement portions 22, and the coupling portions 32 of the sign 70 are the same as the cross-section structures of the symbol portions 52, the reinforcement portions 22 and the coupling portions 32 of the sign 50.

### Modified Examples: Sign Configuration Combining Letters and Numbers

A sign 50A shown in Fig. 6B is configured by a combination of the symbol 52 for the upper case letter "B" shown in Fig. 5A, the symbol 62 for the lower case letter "a" shown in Fig. 5B, and the symbol 72 for the number "2" shown in Fig. 5C. The blank region 54 is provided inside the symbol 52, and the reinforcement portion 22 is provided to the blank region 54. The blank region 64 is provided inside the symbol 62, and the reinforcement portion 22 is provided to the blank region 64. The blank region 76 is provided inside the symbol 72, and the reinforcement portion 22 is provided to the blank region 76. The symbol 52 and the symbol 62 are coupled together by the coupling portion 32 provided at an array width direction lower portion. Similarly, the symbol 62 and the symbol 72 are coupled together by the coupling portion 32 provided at an array width direction lower portion.

A sign 50B shown in Fig. 6C is configured by a combination of the symbol 72 for the number "5" shown in Fig. 5C, and the symbol 62 for the lower case letter "i" shown in Fig. 5B. The blank region 76 is provided inside the symbol 72, and the reinforcement portion 22 is provided to the blank region 76. The blank region 66 is provided inside the symbol 62, and the reinforcement portion 22 is provided to the blank region 66. The symbol 72 and the symbol 62 are coupled together by the coupling portion 32 provided at an array width direction lower portion.

### Operation and Advantageous Effects of the Present Exemplary Embodiment

The sign (upper case letters) 50 according to the present exemplary embodiment shown in Fig. 5A, the sign (lower case letters) 60 according to the present exemplary embodiment shown in Fig. 5B, and the sign (numbers) 70 according to the present exemplary embodiment shown in Fig. 5C are capable of obtaining similar operation and advantageous effects to the operation and advantageous effects obtained by the signs 10, 40 according to the first exemplary embodiment.

Moreover, as shown in Fig. 5A, in the sign 50 according to the present exemplary embodiment, the reinforcement portions 22 are provided to the blank regions 54 and blank regions 56 positioned at array width direction lower portions of the symbol portions 52, and the coupling portions 32 are provided at the array width direction positions same as the array width direction positions of the reinforcement portions 22. As shown in Fig. 6A, the sign 50 is configured with the symbol thickness Ta at the array width direction (symbol height Lh direction) upper portions of the symbol portions 52, and the symbol thickness Tc, at the array width direction lower portions, that is thinner than the symbol thickness Ta. Accordingly, although the rigidity of the symbol portions 52 is lower at the array width direction lower portions than at the array width direction upper portions, due to providing the reinforcement portions 22 at the array width direction lower portions of the symbol portions 52, and providing the coupling portions 32 at locations at the array width direction positions same as the array width direction positions of the reinforcement portions 22, the overall strength of the sign 50, including the symbol portions 52, can be increased. In addition, the front faces 52B of the symbol portions 52 are configured with projecting curved face shapes, enabling the symbol portions 52 to give a 3D (stereoscopic) appearance even when the viewing angle of the symbol portions 52 changes in the array width direction. This enables a further improvement to the design characteristics of the sign 50. Note that the sign 60 shown in Fig. 5B and the sign 70 shown in Fig. 5C are each capable of obtaining similar operation and advantageous effects to the operation and advantageous effects obtained by the sign 50.

### First Comparative Example

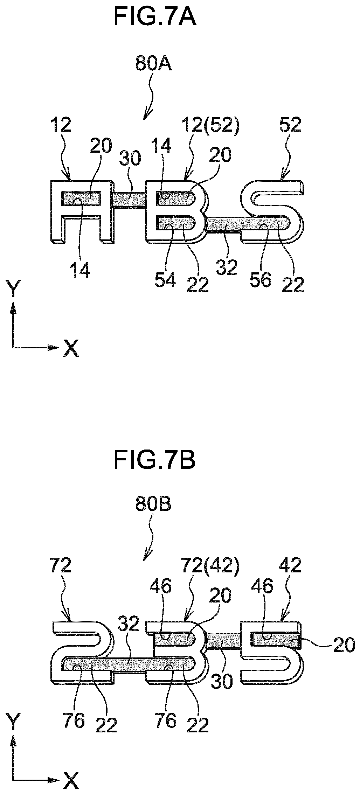

Explanation follows regarding signs according to a first comparative example of the present invention, with reference to Figs. 7A and 7B. As shown in Fig. 7A, a sign 80A according to the present comparative example is configured by a combination of the sign 10 according to the first exemplary embodiment, and the sign 50 according to the second exemplary embodiment. More specifically, the sign 80A is configured by a combination of the symbol portions 12 for the upper case letters "A" and "B" shown in Fig. 1A, and the symbol portions 52 for the upper case letters "B" and "S" shown in Fig. 5A. The blank regions 14 are provided at array width direction upper portions inside the symbol portions 12 for the upper case letters "A" and "B", and the reinforcement portions 20 are provided to the blank regions 14. The symbol portions 12 are coupled together by the coupling portion 30 provided at an array width direction upper portion.

The symbol portion 12 for the upper case letter "B" is also used as a symbol 52 for the purpose of coupling to the symbol 52 for the upper case letter "S". The blank region 54 is provided at an array width direction lower portion inside the symbol 52 for the upper case letter "B", and the reinforcement portion 22 is provided to the blank region 54. The blank region 56 is provided at an array width direction lower portion inside the symbol 52 for the upper case letter "S", and the reinforcement portion 22 is provided to the blank region 56. The symbol portions 52 are coupled together by the coupling portion 32 provided at an array width direction lower portion.

A sign 80B according to the present comparative example shown in Fig. 7B is configured by a combination of the symbol portions 72 for the numbers "2" and "3" shown in Fig. 5C, and the symbol portions 42 for the numbers "3" and "5" shown in Fig. 1B. The blank regions 76 are provided at array width direction lower portions inside the symbol portions 72 for the numbers "2" and "3", and the reinforcement portions 22 are provided to the blank regions 76. The symbol portions 72 are coupled together by the coupling portion 32 provided at an array width direction lower portion.

The symbol 72 for the number "3" is also used as a symbol 42 for the purpose of coupling to the symbol 42 for the number "5". The blank region 46 is provided at an array width direction upper portion inside the symbol 42 for the number "3", and the reinforcement portion 20 is provided to the blank region 46. The blank region 46 is also provided at an array width direction upper portion inside the symbol 42 for the number "5", and the reinforcement portion 20 is provided to the blank region 46. The symbol portions 42 are coupled together by the coupling portion 30 provided at an array width direction upper portion.

### Operation and Advantageous Effects of the Present Comparative Example

The sign 80A according to the present comparative example shown in Fig. 7A, and the sign 80B according to the present comparative example shown in Fig. 7B, are capable of obtaining similar operation and advantageous effects to the operation and advantageous effects obtained by the signs 10 and 40 according to the first exemplary embodiment, and the signs 50, 60, and 70 according to the second exemplary embodiment.

The sign 80A according to the present comparative example shown in Fig. 7A enables a sense of uniformity to be achieved between the overall form of the plural symbol portions 12 and the overall form of the reinforcement portions 20 and the coupling portion 30 provided at the array width direction upper portion. In addition, a sense of uniformity can be achieved between the overall form of the plural symbol portions 52 and the overall form of the reinforcement portions 22 and the coupling portion 32 provided at the array width direction lower portion. A further improvement in the design characteristics is enabled due to enabling a sense of uniformity to be achieved for the overall form of the sign 80A. Note that the sign 80B according to the present comparative example shown in Fig. 7B likewise obtains the operation and advantageous effect of enabling a further improvement to the design characteristics, similarly to the operation and advantageous effect obtained by the sign 80A according to the present comparative example.

### Second Comparative Example

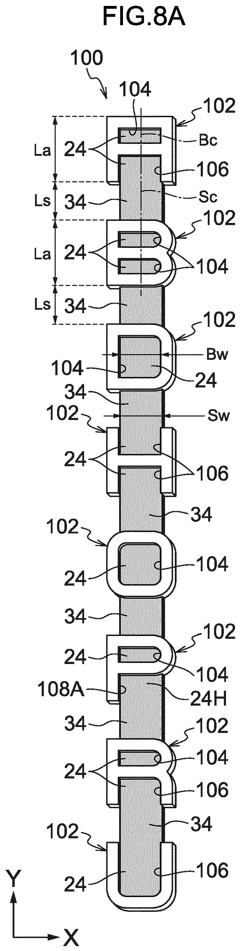

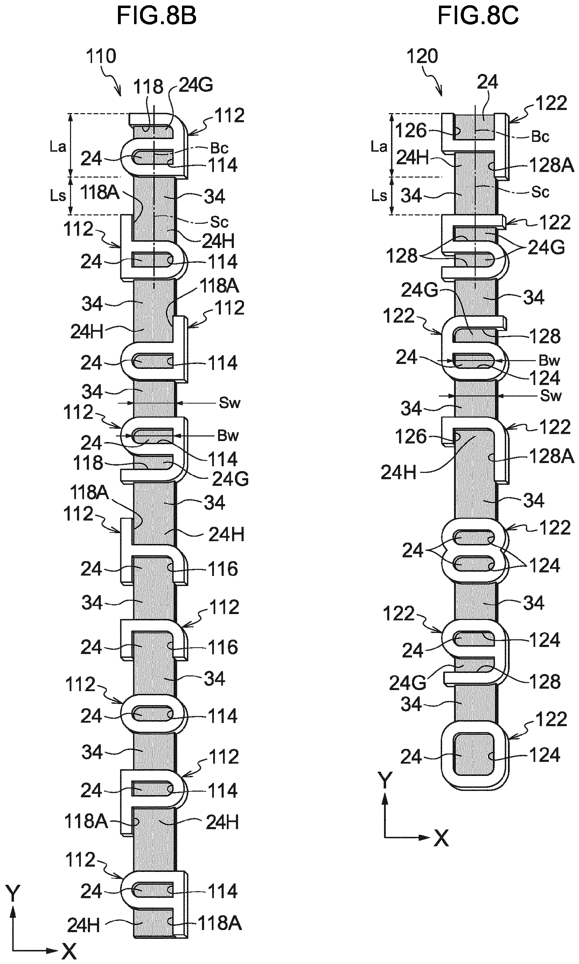

Explanation follows regarding a sign according to a second comparative example of the present invention, with reference to Figs. 8A, 8B, 8C. In the second comparative example, explanation is given regarding an example in which the array direction of the sign symbol portions has been changed.

### Sign Configuration with Upper Case Letters as Symbol portions

As shown in Fig. 8A, a sign 100 according to the second comparative example has a different array direction to that of the sign 10 shown in Fig. 1A, for example. The sign 100 includes plural symbol portions 102 arrayed in a straight line with the arrow Y direction corresponding to the symbol height Lh direction shown in Fig. 2 as the array direction. Adjacent symbol portions 102 adjacent in the array direction are spaced at uniform intervals apart from each other, and are coupled together by coupling portions 34. Similarly to in the sign 10, in the sign 100, regions in the array direction corresponding to the symbol portions 102 are indicated by the reference numerals La, and in the same direction, regions corresponding to the coupling portions 34 are indicated by the reference numerals Ls.

In the sign 100, the symbol portions 102 are configured by principal upper case letters. More specifically, the sign 100 is configured by an array of symbol portions 102 for the upper case letters "A", "B", "D", "H", "O", "P", "R", and "U". Blank regions 104 with an enclosed shape (periphery enclosed shape) are provided inside the symbol portions 102 for the upper case letters "A", "B", "D", "O", "P", and "R", and reinforcement portions 24 are provided to the blank regions 104. Blank regions 106 with an opened shape opening in the array direction are provided inside the symbol portions 102 for the upper case letters "H", "R", and "U", and reinforcement portions 24 are provided to the blank regions 106. In the present comparative example, a blank region 108A with an opened shape opening in both the array direction and the array width direction is provided inside the symbol 102 for the upper case letter "P", and a reinforcement portion 24H is provided to the blank region 108A. Similarly to the sign 10 shown in Fig. 1A, for example, there is no limitation of the upper case letters configuring the sign 100 to the symbol portions 102 for "A" etc. mentioned above, and the sign 100 may be configured including symbol portions 102 for other upper case letters.

Similarly to the coupling portions 30 of the sign 10, the array width direction positions of the coupling portions 34 of the sign 100 between adjacent symbol portions 102 adjacent in the array direction coincide with (are aligned with) the array width direction positions of the reinforcement portions 24, and the coupling portions 34 are provided with the same width as the reinforcement portions 24 in the present example. The array width direction coupling width Sw of the coupling portions 34 is the same as the array width direction reinforcement width Bw of the reinforcement portions 24. The center position Sc of the coupling width Sw coincides with the center position Bc of the reinforcement width Bw.

The cross-section structures of the symbol portions 102, the reinforcement portions 24, and the coupling portions 34 of the sign 100 are the same as the cross-section structures of the symbol portions 12, the reinforcement portions 20, and the coupling portions 30 of the sign 10 shown in Fig. 3A.

### Sign Configuration with Lower Case Letters as Symbol portions

A sign 110 according to the second comparative example shown in Fig. 8B includes plural symbol portions 112 arrayed in a straight line with the arrow Y direction as the array direction, similarly to in the sign 100. Adjacent symbol portions 112 adjacent in the array direction are spaced at uniform intervals apart from each other, and are coupled together by coupling portions 34. Similarly to the sign 100, in the sign 110, regions in the array direction corresponding to the symbol portions 112 are indicated by the reference numerals La, and in the same direction, regions corresponding to the coupling portions 34 are indicated by the reference numerals Ls.

In the sign 110, the symbol portions 112 are configured by principal lower case letters. More specifically, the sign 110 is configured by an array of symbol portions 112 for the lower case letters "a", "b", "d", "g", "h", "n", "o", "p", and "q". Blank regions 114 with an enclosed shape (periphery enclosed shape) are provided inside the symbol portions 112 for the lower case letters "a", "b", "d", "g", "o", "p", and "q", and reinforcement portions 24 are provided to the blank regions 114. Blank regions 116 with an opened shape opening in the array direction are provided inside the symbol portions 112 for the lower case letters "h" and "n", and reinforcement portions 24 are provided to the blank regions 116. In the present comparative example, blank regions 118 with an opened shape opening in the array width direction are provided inside the symbol portions 112 for the lower case letters "a" and "g". Reinforcement portions 24G are provided to the blank regions 118. Blank regions 118A with an opened shape opening in both the array direction and the array width direction are provided inside the symbol portions 112 for the lower case letters "b", "d", "h", "p", and "q". Reinforcement portions 24H are also provided to the blank regions 118A. Similarly to the sign 100, there is no limitation of the lower case letters configuring the sign 110 to the symbol portions 112 for "a" etc. mentioned above, and the sign 110 maybe configured including symbol portions 112 for other lower case letters.

Similarly to the coupling portions 34 of the sign 100, the array width direction positions of the coupling portions 34 of the sign 110 between adjacent symbol portions 112 adjacent in the array direction coincide with (are aligned with) the array width direction positions of the reinforcement portions 24, and the coupling portions 34 are provided with the same width as the reinforcement portions 24 in the present example. The array width direction coupling width Sw of the coupling portions 34 is the same as the array width direction reinforcement width Bw of the reinforcement portions 24. The center position Sc of the coupling width Sw coincides with the center position Bc of the reinforcement width Bw.

The cross-section structures of the symbol portions 112, the reinforcement portions 24, and the coupling portions 34 of the sign 110 are the same as the cross-section structures of the symbol portions 102, the reinforcement portions 24, and the coupling portions 34 of the sign 100 (see Fig. 3A).

### Sign Configuration with Numbers as Symbol portions

A sign 120 according to the second comparative example shown in Fig. 8C includes plural symbol portions 122 arrayed in a straight line with the arrow Y direction as the array direction, similarly to in the sign 100. Adjacent symbol portions 122 adjacent in the array direction are spaced at uniform intervals apart from each other, and are coupled together by coupling portions 34. Similarly to the sign 100, in the sign 120, regions in the array direction corresponding to the symbol portions 122 are indicated by the reference numerals La, and in the same direction, regions corresponding to the coupling portions 34 are indicated by the reference numerals Ls.

In the sign 120, the symbol portions 122 are configured by principal numbers. More specifically, the sign 120 is configured by an array of symbol portions 122 for the numbers "4", "5", "6", "7", "8", "9", and "0". Blank regions 124 with an enclosed shape (periphery enclosed shape) are provided inside the symbol portions 122 for the numbers "6", "8", "9" and "0", and reinforcement portions 24 are provided to the blank regions 124. Moreover, a blank region 126 with an opened shape opening in the array direction is provided inside the symbol portion 122 for the number "4", and a reinforcement portion 24 is provided to the blank region 126. In the present comparative example, blank regions 128 with an opened shape opening in the array width direction are provided inside the symbol portions 122 for the numbers "5", "6", and "9". Reinforcement portions 24G are provided to the blank regions 128. Blank regions 128A with an opened shape opening in both the array direction and the array width direction are provided inside the symbol portions 122 for the numbers "4" and "7". Reinforcement portions 24H are provided to the blank regions 128A. The numbers configuring the sign 120 are not limited to the symbol portions 122 for "4" etc. described above, and may also include symbol portions 122 for the other numbers "1", "2", and "3", not shown in the drawings.

Similarly to the coupling portions 34 of the sign 100, the array width direction positions of the coupling portions 34 of the sign 120 between adjacent symbol portions 122 adjacent in the array direction coincide with (are aligned with) the array width direction positions of the reinforcement portions 24, and the coupling portions 34 are provided with the same width as the reinforcement portions 24 in the present example. The array width direction coupling width Sw of the coupling portions 34 is the same as the array width direction reinforcement width Bw of the reinforcement portions 22. The center position Sc of the coupling width Sw coincides with the center position Bc of the reinforcement width Bw.

The cross-section structures of the symbol portions 122, the reinforcement portions 24, and the coupling portions 34 of the sign 120 are the same as the cross-section structures of the symbol portions 102, the reinforcement portions 24 and the coupling portions 34 of the sign 100.

### Operation and Advantageous Effects of the Present Comparative Example

The sign (upper case letters) 100 according to the present comparative example shown in Fig. 8A, the sign (lower case letters) 110 according to the present comparative example shown in Fig. 8B, and the sign (numbers) 120 according to the present comparative example shown in Fig. 8C are capable of obtaining similar operation and advantageous effects to the operation and advantageous effects obtained by the signs 10, 40 according to the first exemplary embodiment, even though the array direction of the symbol portions 102, 112, 122 has been changed.

### Third Comparative Example

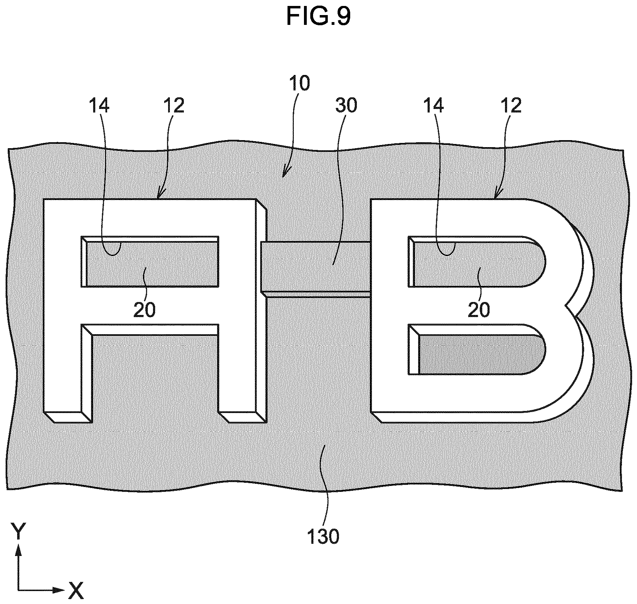

Explanation follows regarding a sign according to a third comparative example of the present invention, with reference to Fig. 9. As shown in Fig. 9, in the present comparative example, the sign 10 shown in Fig. 2 described above is attached to an attachment body 130. In a case in which the vehicle is a car, for example, the attachment body 130 is interior decor (interior section) such as an instrument panel or a steering wheel, or exterior decor (exterior section) such as a quarter panel, a trunk panel, or a back door. In cases in which the vehicle is a motorbike, the attachment body 130 is interior decor such as a meter panel, or an exterior decor such as a fuel tank or cowl.

The surface color of the design faces of the reinforcement portions 20 and the coupling portion 30 of the sign 10 matches the surface color of at least a design face of the attachment body 130 peripheral to the reinforcement portions 20 and the coupling portion 30. More specifically, as shown in Fig. 3A, in the first exemplary embodiment, the design faces of the reinforcement portions 20 are coated black, for example, by the surface-processed layer 20F. As shown in Fig. 3A and Fig. 3B, design faces of the coupling portions 30 are coated black, for example, by the surface-processed layer 30F. The surface color as the design face of the attachment body 130 is colored black, for example. Note that there is no limitation to black, and in a case in which the design face of the attachment body 130 to be colored red, the design faces of the reinforcement portions 20 and the coupling portions 30 are coated red, and in a case in which the design face of the attachment body 130 to be colored blue, the design faces of the reinforcement portions 20 and the coupling portions 30 are coated blue. There is no limitation to a colored coating, and in a case in which the design face of the attachment body 130 to be applied with texturing, the design faces of the reinforcement portions 20 and the coupling portions 30 are applied with texturing.

### Operation and Advantageous Effect of the Present Comparative Example

The sign 10 according to the present comparative example is capable of obtaining similar operation and advantageous effects to the operation and advantageous effects obtained by the sign 10 according to the first exemplary embodiment. Moreover, as shown in Fig. 9, in the sign 10 according to the present comparative example, the design of the reinforcement portions 20 and the coupling portions 30 matches the design of the attachment body 130 to achieve a mask-design against the design of the attachment body 130 (to achieve a protection color when colored). The outlines of the symbol portions 12 are made clearer since the reinforcement portions 20 and the coupling portions 30 are not noticeable against the surface of the attachment body 130. The symbol portions 12 are accordingly made easier to read, thereby enabling an improvement in the visibility of the symbol portions 12.

Note that in the present comparative example, there is no limitation to the sign 10, and the signs 40, 50, 50A, 50B, 60, 70, 80A, 80B, 100, 110, and 120 are all applicable to the present comparative example.

### Third Exemplary Embodiment

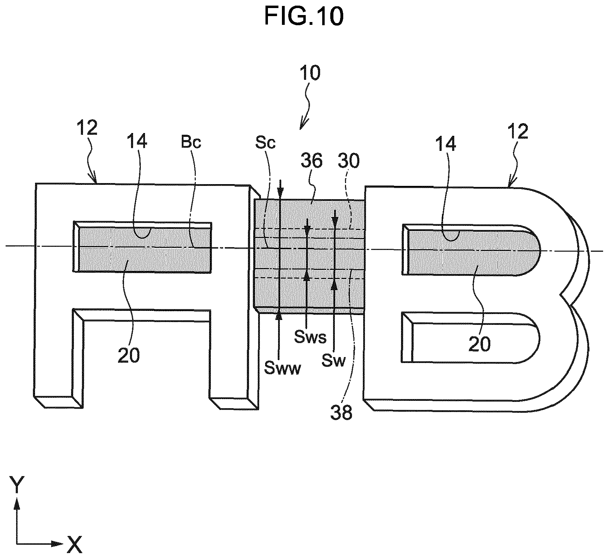

Explanation follows regarding a sign according to a third exemplary embodiment of the present invention, with reference to Fig. 10. As shown in Fig. 10, in the present exemplary embodiment, in the sign 10 shown in Fig. 2, the symbol portions 12 are coupled together by a coupling portion 36. The array width direction coupling width Sww of the coupling portion 36 is set larger than the reinforcement width Bw (see Fig. 2) of the reinforcement portions 20 in the same direction. The center position Sc of the coupling portion 36 coincides with the center position Bc of the reinforcement portions 20.

In the sign 10, the symbol portions 12 may be coupled together by a coupling portion 38 which is shown by a long dashed short dashed line. The array width direction coupling width Sws of the coupling portion 38 is set smaller than the reinforcement width Bw of the reinforcement portions 20 in the same direction. The center position Sc of the coupling portion 38 coincides with the center position Bc of the reinforcement portions 20.

### Operation and Advantageous Effects of the Present Exemplary Embodiment

In the sign 10 according to the present exemplary embodiment, the symbol portions 12 are coupled together by the coupling portion 36 with the large coupling width Sww, thereby enabling a further increase in overall strength. Moreover, in the sign 10 according to the present exemplary embodiment, the center position Sc of the coupling portion 36 coincides with the center position Bc of the reinforcement portions 20, thereby enhancing the sense of uniformity of the shape, and enabling improved design characteristics.

Moreover, in the sign 10 according to the present exemplary embodiment, the symbol portions 12 are coupled together by the coupling portion 38 with the small coupling width Sws. However, providing the reinforcement portions 20 to the symbol portions 12 and providing the coupling portion 38 such that the array width direction position of the coupling portion 38 coincides with (is aligned with) the array width direction positions of the reinforcement portions 20, enabling an increase in overall strength. Moreover, in the sign 10 according to the present exemplary embodiment, the center position Sc of the coupling portion 38 coincides with the center position Bc of the reinforcement portions 20, thereby enhancing the sense of uniformity of the shape, and enabling improved design characteristics.

Additional Explanation Regarding Above Exemplary Embodiments and Comparative Examples

The present invention is not limited to the exemplary embodiments described above, and modifications such as the following may be implemented. For example, the present invention is not limited to the alphanumeric typesets (styles of type) and fonts of the symbol portions in the above exemplary embodiments and comparative examples. For example, the alphanumeric characters of the symbol portions may be in an italicized font. Moreover, in the above exemplary embodiments and comparative examples, explanation has been given regarding examples in which the present invention is applied to signs using alphanumeric characters, however in the present invention there is no limitation of the symbol text to Roman characters. The present invention may, for example, be applied to text in Chinese characters, Japanese characters (hiragana, katakana), Korean characters, or Arabic characters.

In the signs according to the exemplary embodiments and comparative examples described above, the array direction of the symbol portions is aligned with either the arrow X direction or the arrow Y direction, however in the present invention the array direction may be an inclined direction set in a range of ±45 degrees with respect to the arrow X direction, or set in a range of within ±45 degrees with respect to the arrow Y direction. In the signs according to the exemplary embodiments and comparative examples described above, the array width direction positions of the reinforcement portions and the array width direction positions of the coupling portions are coincided with each other, however in the present invention it is sufficient that at least a portion of the array width direction position of the reinforcement portion and the array width direction position of the coupling portion are coincided with each other. For example, it is sufficient that, in the array width direction (when seen along the array direction), the reinforcement portion and the coupling portion are overlapped at least portion thereof.

The present invention may be configured by a sign combining a sign according to the first exemplary embodiment and a sign according to the second exemplary embodiment. More specifically, a sign may be configured with reinforcement portions provided to blank regions inside upper case letter symbol portions at an array width direction upper portion, with coupling portions provided at positions coinciding with (corresponding to) the positions of the reinforcement portions, and also with reinforcement portions provided to blank regions inside the symbol portions at an array width direction lower portion, with coupling portions provided at positions coinciding with (corresponding to) the positions of the reinforcement portions. Namely, two coupling portions, respectively provided at the array width direction upper portion and the array width direction lower portion, may extend parallel to each other along the array direction.

In the present invention, a sign may be configured in which either or both out of the reinforcement portion and the coupling portion have a front face height set higher than the front face height of the symbol portion. Namely, a sign may be configured in which the reinforcement portions or the coupling portions project out further than the front faces of the symbol portions. Moreover, in the present invention, the front face height of location of the symbol portion between the reinforcement portion and the coupling portion may match the front face height of either or both out of the reinforcement portion and the coupling portion. In such a case, the design of such location on the symbol portion may match the design of the reinforcement portion and/or the coupling portion.

In the exemplary embodiments described and comparative examples above, explanation has been given regarding examples in which the present invention is applied to a sign attached to a vehicle, however application of the present invention is not limited to vehicles. For example, the present invention may also be applied to a portable key capable of locking and unlocking a door lock, or of starting and stopping an engine, without needing to insert, as an example of a vehicle related device. The present invention may also be applied to signs attached as logos to electronic devices, such as personal computers, handheld terminals, or mobile telephones, or to electrical goods such as monitors (televisions), refrigerators, washing machines, or the like, which are not directly related to vehicles. The present invention may also be applied to signs attached to decorative items such as bags, shoes, wristwatches, accessories or the like.

A sign is provided capable of increasing strength. A sign includes plural symbol portions arrayed in an array direction. Blank regions with an enclosed shape, and blank regions with an opened shape opening in the array direction, are formed inside the symbol portions. Reinforcement portions are provided at the blank regions. The symbol portions are coupled together by coupling portions, and the coupling portions are provided such that an array width direction position of the coupling portions coincides with an array width direction position of the reinforcement portions.

## Claims

1. A sign (10, 40, 50, 50A, 50B, 60, 70) comprising:
a plurality of symbol portions (12, 42, 52, 62, 72) configured by letters and/or numbers that are arrayed in an array direction along which the plurality of symbol portions (12, 42, 52, 62, 72) are arrayed;
a reinforcement portion (20, 22, 24) that is provided at an enclosed or opened region (14, 16, 18, 18A, 44, 46, 54, 56, 58, 58A, 64, 66, 74, 76) and that is configured to reinforce the symbol portion (12, 42, 52, 62, 72), the enclosed or opened region (14, 16, 18, 18A, 44, 46, 54, 56, 58, 58A, 64, 66, 74, 76) being formed by the symbol portion (12, 42, 52, 62, 72);
a coupling portion (30, 32, 36, 38) that couples the symbol portions (12, 42, 52, 62, 72) together, the coupling portion (30, 32, 36, 38) being provided between the symbol portions (12, 42, 52, 62, 72) such that a position of the coupling portion (30, 32, 36, 38) and a position of the reinforcement portion (20, 22, 24) coincide with each other in an array width direction which is orthogonal to the array direction;
the symbol portion (12, 42, 52, 62, 72) is provided with a symbol body (12A) having a predetermined thickness,
the coupling portion (30, 32, 36, 38) is provided with a coupling body (30A) having a predetermined thickness,
the reinforcement portion (20, 22, 24) is provided with a reinforcement body (20A) having a predetermined thickness and has the same cross-section structure as the coupling portion (30, 32, 36, 38),
the enclosed or opened region (14, 16, 18, 18A, 44, 46, 54, 56, 58, 58A, 64, 66, 74, 76) is a region formed by the symbol body (12A), which is enclosed by the symbol body (12A) or is opened in the array direction, in a plan view of the sign (10, 40, 50, 50A, 50B, 60, 70, 80A, 80B) seen in a thickness direction of the symbol portion, and
the reinforcement body (20A) and the coupling body (30A) are configured integrally with the symbol body (12A), **characterized in that**
the coupling portion (30, 32, 36, 38) is configured as a bridge,
the reinforcement portion (20, 22, 24) is only provided at the enclosed or opened region (14, 16, 18, 18A, 44, 46, 54, 56, 58, 58A, 64, 66, 74, 76), which is positioned at one side with respect to a center position (Ac) of the sign (10, 40, 50, 50A, 50B, 60, 70) in the array width direction of the plurality of symbol portions (12, 42, 52, 62, 72), wherein
a center line (Sc) in the array width direction of the coupling portion (30, 32, 36, 38) coincides with a center line (Bc) in the array width direction of the reinforcement portion (20, 22, 24).

2. The sign (10, 40, 50, 50A, 50B, 60, 70) of claim 1, wherein:
the enclosed or opened regions (14, 16, 18, 18A, 44, 46, 54, 56, 58, 58A, 64, 66, 74, 76) are provided at the symbol portion (12, 42, 52, 62, 72) on both sides with respect to a center position in the array width direction of the symbol portion (12, 42, 52, 62, 72), and
the reinforcement portion (20, 22, 24) is provided at one of the enclosed or opened regions (14, 16, 18, 18A, 44, 46, 54, 56, 58, 58A, 64, 66, 74, 76), a position in the array width direction of the one of the enclosed or opened regions (14, 16, 18, 18A, 44, 46, 54, 56, 58, 58A, 64, 66, 74, 76) coinciding with a position in the array width direction of the coupling portion (30, 32, 36, 38).

3. The sign (10, 40, 50, 50A, 50B, 60, 70) of claim 1 or claim 2, wherein a color or structure of a surface of the reinforcement portion (20, 22, 24) and of the coupling portion (30, 32, 36, 38) are different from a color or structure of a surface of the symbol portion (12, 42, 52, 62, 72).

4. The sign (10, 40, 50, 50A, 50B, 60, 70) of claim 3, wherein the symbol portion (12, 42, 52, 62, 72), the reinforcement portion (20, 22, 24), and the coupling portion (30, 32, 36, 38) are attachable to an attachment body (130), and a color or structure of a surface of the reinforcement portion (20, 22, 24) and of the coupling portion (30, 32, 36, 38) matches a color or structure of a surface of the attachment body (130) at a periphery of the reinforcement portion (20, 22, 24) and the coupling portion (30, 32, 36, 38).

5. The sign (10, 40, 50, 50A, 50B, 60, 70) of claim 1 or claim 2, wherein a width dimension in the array width direction of the coupling portion (30, 32, 36, 38) is the same as a width dimension in the array width direction of the reinforcement portion (20, 22, 24).

6. The sign (10, 40, 50, 50A, 50B, 60, 70) of claim 1, wherein the reinforcement portion (20, 22, 24) is further provided at another enclosed or opened region (14, 16, 18, 18A, 44, 46, 54, 56, 58, 58A, 64, 66, 74, 76) formed by the symbol body (12A), which is opened in the array width direction in the plan view.

## Patentansprüche

1. Zeichen (10, 40, 50, 50A, 50B, 60, 70), mit:
einer Vielzahl von Symbolabschnitten (12, 42, 52, 62, 72), die durch Buchstaben und/oder Zahlen eingerichtet sind, die in einer Anordnungsrichtung angeordnet sind, entlang derer die Vielzahl von Symbolabschnitten (12, 42, 52, 62, 72) angeordnet ist;
einem Verstärkungsabschnitt (20, 22, 24), der an einem umschlossenen oder offenen Bereich (14, 16, 18, 18A, 44, 46, 54, 56, 58, 58A, 64, 66, 74, 76) vorgesehen ist, und der eingerichtet ist, den Symbolabschnitt (12, 42, 52, 62, 72) zu verstärken, wobei der umschlossene oder offene Bereich (14, 16, 18, 18A, 44, 46, 54, 56, 58, 58A, 64, 66, 74, 76) durch den Symbolabschnitt (12, 42, 52, 62, 72) ausgebildet ist;
einem Kopplungsabschnitt (30, 32, 36, 38), der die Symbolabschnitte (12, 42, 52, 62, 72) miteinander koppelt, wobei der Kopplungsabschnitt (30, 32, 36, 38) zwischen den Symbolabschnitten (12, 42, 52, 62, 72) so vorgesehen ist, dass eine Position des Kopplungsabschnitts (30, 32, 36, 38) und eine Position des Verstärkungsabschnitts (20, 22, 24) in einer Anordnungsbreitenrichtung miteinander übereinstimmen, die senkrecht zu der Anordnungsrichtung ist;
wobei der Symbolabschnitt (12, 42, 52, 62, 72) mit einem Symbolkörper (12A) versehen ist, der eine vorbestimmte Dicke hat,
der Kopplungsabschnitt (30, 32, 36, 38) mit einem Kopplungskörper (30A) versehen ist, der eine vorbestimmte Dicke hat,
der Verstärkungsabschnitt (20, 22, 24) mit einem Verstärkungskörper (20A) versehen ist, der eine vorbestimmte Dicke hat und dieselbe Querschnittstruktur wie der Kopplungsabschnitt (30, 32, 36, 38) hat,
der umschlossene oder offene Bereich (14, 16, 18, 18A, 44, 46, 54, 56, 58, 58A, 64, 66, 74, 76) ein Bereich ist, der durch den Symbolkörper (12A) ausgebildet ist, der durch den Symbolkörper (12A) umschlossen ist oder in der Anordnungsrichtung in einer Draufsicht des Zeichens (10, 40, 50, 50A, 50B, 60, 70, 80A, 80B), in einer Dickenrichtung des Symbolabschnitts betrachtet, offen ist, und
der Verstärkungskörper (20A) und der Kopplungskörper (30A) mit dem Symbolkörper (12A) einstückig eingerichtet sind, **dadurch gekennzeichnet, dass**
der Kopplungsabschnitt (30, 32, 36, 38) als eine Brücke eingerichtet ist,
der Verstärkungsabschnitt (20, 22, 24) lediglich an dem umschlossenen oder offenen Bereich (14, 16, 18, 18A, 44, 46, 54, 56, 58, 58A, 64, 66, 74, 76) vorgesehen ist, der an einer Seite bezüglich einer Mittelposition (Ac) des Zeichens (10, 40, 50, 50A, 50B, 60, 70) in der Anordnungsbreitenrichtung der Vielzahl von Symbolabschnitten (12, 42, 52, 62, 72) angeordnet ist, wobei
eine Mittellinie (Sc) in der Anordnungsbreitenrichtung des Kopplungsabschnitts (30, 32, 36, 38) mit einer Mittellinie (Bc) in der Anordnungsbreitenrichtung des Verstärkungsabschnitts (20, 22, 24) übereinstimmt.

2. Zeichen (10, 40, 50, 50A, 50B, 60, 70) nach Anspruch 1, wobei:
die umschlossenen oder offenen Bereiche (14, 16, 18, 18A, 44, 46, 54, 56, 58, 58A, 64, 66, 74, 76) an dem Symbolabschnitt (12, 42, 52, 62, 72) auf beiden Seiten bezüglich einer Mittelposition in der Anordnungsbreitenrichtung des Symbolabschnitts (12, 42, 52, 62, 72) vorgesehen sind, und
der Verstärkungsabschnitt (20, 22, 24) an einem der umschlossenen oder offenen Bereiche (14, 16, 18,18A, 44, 46, 54, 56, 58, 58A, 64, 66, 74, 76) vorgesehen ist, wobei eine Position in der Anordnungsbreitenrichtung des einen der umschlossenen oder offenen Bereiche (14, 16, 18, 18A, 44, 46, 54, 56, 58, 58A, 64, 66, 74, 76) mit einer Position in der Anordnungsbreitenrichtung des Kopplungsabschnitts (30, 32, 36, 38) übereinstimmt.

3. Zeichen (10, 40, 50, 50A, 50B, 60, 70) nach Anspruch 1 oder 2, wobei
sich eine Farbe oder Struktur einer Oberfläche des Verstärkungsabschnitts (20, 22, 24) und des Kopplungsabschnitts (30, 32, 34, 36, 38) von einer Farbe oder einer Struktur einer Oberfläche des Symbolabschnitts (12, 42, 52, 62, 72) unterscheiden.

4. Zeichen (10, 40, 50, 50A, 50B, 60, 70) nach Anspruch 3, wobei der Symbolabschnitt (12, 42, 52, 62, 72), der Verstärkungsabschnitt (20, 22, 24) und der Kopplungsabschnitt (30, 32, 36, 38) an einem Befestigungskörper (130) befestigbar sind, und wobei eine Farbe oder eine Struktur einer Oberfläche des Verstärkungsabschnitts (20, 22, 24) und des Kopplungsabschnitts (30, 32, 36, 38) an eine Farbe oder eine Struktur einer Oberfläche des Befestigungskörpers (130) an einem Rand des Verstärkungsabschnitts (20, 22, 24) und des Kopplungsabschnitts (30, 32, 36, 38) angeglichen ist.

5. Zeichen (10, 40, 50, 50A, 50B, 60, 70) nach Anspruch 1 oder 2, wobei ein Breitenmaß in der Anordnungsbreitenrichtung des Kopplungsabschnitts (30, 32, 36, 38) dasselbe ist wie ein Breitenmaß in der Anordnungsbreitenrichtung des Verstärkungsabschnitts (20, 22, 24).

6. Zeichen (10, 40, 50, 50A, 50B, 60, 70) nach Anspruch 1, wobei der Verstärkungsabschnitt (20, 22, 24) ferner an einen anderen umschlossenen oder offenen Bereich (14, 16, 18, 18A, 44, 46, 54, 56, 58, 58A, 64, 66, 74, 76) vorgesehen ist, der durch den Symbolkörper (12A) ausgebildet ist, der in der Anordnungsbreitenrichtung in der Draufsicht offen ist.

## Revendications

1. Panneau (10, 40, 50, 50A, 50B, 60, 70) comprenant :
une pluralité de parties de symbole (12, 42, 52, 62, 72) configurées par des lettres et/ou des nombres qui sont regroupés dans une direction d'agencement le long de laquelle la pluralité de parties de symbole (12, 42, 52, 62, 72) sont regroupées ;
une partie de renforcement (20, 22, 24) qui est prévue au niveau d'une région enfermée ou ouverte (14, 16, 18, 18A, 44, 46, 54, 56, 58, 58A, 64, 66, 74, 76) et qui est configurée pour renforcer la partie de symbole (12, 42, 52, 62, 72), la région enfermée ou ouverte (14, 16, 18, 18A, 44, 46, 54, 56, 58, 58A, 64, 66, 74, 76) étant formée par la partie de symbole (12, 42, 52, 62, 72) ;
une partie de couplage (30, 32, 36, 38) qui couple les parties de symbole (12, 42, 52, 62, 72) ensemble, la partie de couplage (30, 32, 36, 38) étant prévue entre les parties de symbole (12, 42, 52, 62, 72) de sorte qu'une position de la partie de couplage (30, 32, 36, 38) et une position de la partie de renforcement (20, 22, 24) coïncident dans une direction de largeur d'agencement qui est orthogonale à la direction d'agencement ;
la partie de symbole (12, 42, 52, 62, 72) est prévue avec un corps de symbole (12A) ayant une épaisseur prédéterminée ;
la partie de couplage (30, 32, 36, 38) est prévue avec un corps de couplage (30A) ayant une épaisseur prédéterminée,
la partie de renforcement (20, 22, 24) est prévue avec un corps de renforcement (20A) ayant une épaisseur prédéterminée et a la même structure transversale que la partie de couplage (30, 32, 36, 38),
la région enfermée ou ouverte (14, 16, 18, 18A, 44, 46, 54, 56, 58, 58A, 64, 66, 74, 76) est une région formée par le corps de symbole (12A) qui est enfermée par le corps de symbole (12A) ou est ouverte dans la direction d'agencement, sur une vue en plan du panneau (10, 40, 50, 50A, 50B, 60, 70, 80A, 80B) observé dans le sens de l'épaisseur de la partie de symbole, et
le corps de renforcement (20A) et le corps de couplage (30A) sont configurés de manière solidaire avec le corps de symbole (12A), **caractérisé en ce que** :
la partie de couplage (30, 32, 36, 38) est configurée comme un pont,
la partie de renforcement (20, 22, 24) est uniquement prévue au niveau de la région enfermée ou ouverte (14, 16, 18, 18A, 44, 46, 54, 56, 58, 58A, 64, 66, 74, 76), qui est positionnée d'un côté par rapport à une position centrale (Ac) du panneau (10, 40, 50, 50A, 50B, 60, 70) dans le sens de la largeur d'agencement de la pluralité de parties de symbole (12, 42, 52, 62, 72), dans lequel :
une ligne centrale (Sc) dans le sens de la largeur d'agencement de la partie de couplage (30, 32, 36, 38) coïncide avec une ligne centrale (Bc) dans le sens de la largeur d'agencement de la partie de renforcement (20, 22, 24).

2. Panneau (10, 40, 50, 50A, 50B, 60, 70) selon la revendication 1, dans lequel :
les régions enfermées ou ouvertes (14, 16, 18, 18A, 44, 46, 54, 56, 58, 58A, 64, 66, 74, 76) sont prévues au niveau de la partie de symbole (12, 42, 52, 62, 72) des deux côtés par rapport à une position centrale dans le sens de la largeur d'agencement de la partie de symbole (12, 42, 52, 62, 72), et
la partie de renforcement (20, 22, 24) est prévue au niveau de l'une des régions enfermées ou ouvertes (14, 16, 18, 18A, 44, 46, 54, 56, 58, 58A, 64, 66, 74, 76), une position dans le sens de la largeur d'agencement de l'une des régions enfermées ou ouvertes (14, 16, 18, 18A, 44, 46, 54, 56, 58, 58A, 64, 66, 74, 76) coïncidant avec une position dans la sens de la largeur d'agencement de la partie de couplage (30, 32, 36, 38).

3. Panneau (10, 40, 50, 50A, 50B, 60, 70) selon la revendication 1 ou la revendication 2, dans lequel une couleur ou une structure d'une surface de la partie de renforcement (20, 22, 24) et de la partie de couplage (30, 32, 34, 36, 38) est différente d'une couleur ou d'une structure d'une surface de la partie de symbole (12, 42, 52, 62, 72).

4. Panneau (10, 40, 50, 50A, 50B, 60, 70) selon la revendication 3, dans lequel la partie de symbole (12, 42, 52, 62, 72), la partie de renforcement (20, 22, 24) et la partie de couplage (30, 32, 36, 38) peuvent être fixées à un corps de fixation (130), et une couleur ou une structure d'une surface de la partie de renforcement (20, 22, 24) et de la partie de couplage (30, 32, 36, 38) correspond à une couleur ou structure d'une surface du corps de fixation (130) au niveau d'une périphérie de la partie de renforcement (20, 22, 24) et de la partie de couplage (30, 32, 36, 38).

5. Panneau (10, 40, 50, 50A, 50B, 60, 70) selon la revendication 1 ou la revendication 2, dans lequel une dimension de largeur dans le sens de la largeur d'agencement de la partie de couplage (30, 32, 36, 38) est la même qu'une dimension de largeur dans le sens de la largeur d'agencement de la partie de renforcement (20, 22, 24).

6. Panneau (10, 40, 50, 50A, 50B, 60, 70) selon la revendication 1, dans lequel la partie de renforcement (20, 22, 24) est en outre prévue au niveau d'une autre région enfermée ou ouverte (14, 16, 18, 18A, 44, 46, 54, 56, 58, 58A, 64, 66, 74, 76) formée par un corps de symbole (12A), qui est ouverte dans le sens de la largeur d'agencement sur la vue en plan.
